# EUROPEAN PATENT SPECIFICATION

(11) **EP 1 435 532 B1**
(45) Date of publication and mention of the grant of the patent: **29.08.2012**
(21) Application number: 03028965.6
(22) Date of filing: 17.12.2003
(51) Int. Cl.: G02B 6/00

(54) **Back light apparatus**
Hintenbeleuchtungseinrichtung
Appareil d'illumination en arrière-plan

(30) Priority: 06.01.2003 CN 03101428
(43) Date of publication of application: 07.07.2004
(73) Proprietor: Coretronic Corporation, Chu-Nan 350, Miao-Li County (TW)
(72) Inventor: Hwang, Ping-Feng, Miao-Li County (TW)
(74) Representative: TER MEER - STEINMEISTER & PARTNER GbR

(56) References cited:
- EP-A- 1 070 913
- US-A1- 2001 006 461
- US-A1- 2002 044 437
- US-A1- 2002 070 660

## Description

### BACKGROUND OF THE INVENTION

### 1. Field of the Invention

The present invention relates to a liquid crystal display, and more particularly to a back light apparatus for use in a liquid crystal display.

### 2. Description of the Related Art

A back light module is the key component for liquid crystal display (LCD). By means of the brightness and uniform light source being provided by the backlight module, the LCD panel can display images.

The backlight module can divide into a sidelight mode and a direct light mode according to the position of the light source. The sidelight mode places lamps of the light source on the side edge of a LCD panel and, then, uses a guiding-panel to control light path so that light beams project to a diffuser below the panel and provide uniform light beams. Because of the position of the light source, it suits being used in a light, thin, and power saving display equipment, e.g. a monitor of a notebook. But for big size display and brightness occasions, e.g. TV and desk PC. The sidelight mode can't provide enough brightness. Hence, it needs the direct light mode to directly place the light source below the display panel. The contain space for the light source is bigger, and has a capacity for over two lamps to increase the brightness of the light source and satisfy what's need.

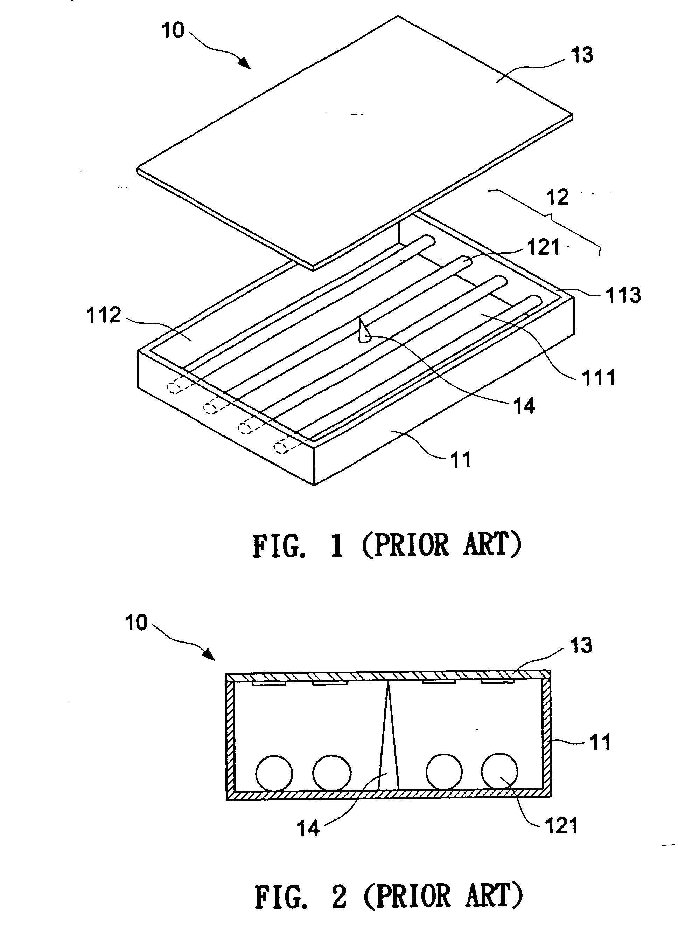

Referring to FIG. 1 and FIG. 2, a direct light back light module 10 comprises a rectangular frame 11 having a container 111. a light source module 12, a diffuser 13, and a supporting rod 14. The surface of the container 111 has a reflection layer 112 to reflect the light beam provided by the light source module 12 to the diffuser 13. The light source module 12 comprises a plurality of light tubes 121 side by side inside the container 111. The two ends of the diffuser 13 fix on a top surface 113 of the rectangular frame 11 and, then, the supporting rod 14 properly is placed on the bottom of the rectangular frame 11, which has one end holding the diffuser 13 to support the diffuser 13.

Due to the supporting rod 14 directly contacting the diffuser 13, the contact part hinders the light from passing. For avoiding the diffuser 13 forming bigger dark area, the supporting rod 14 generally uses a cone having a smaller cross-section on top point and, thus, the top of the supporting rod 14 directly contacts the diffuser 13 with a pointed tip. As the size of the back light module 10 increasing or the inside temperature of the frame 11 raising that causes by the light source module 12, the deformation of the diffuser 13 is increasing and makes downward indentation. Meanwhile, the pointed tip of the supporting rod 14 easily protrudes the diffuser 13 so the diffuser 13 forms a uneven surface or even causes the unequal interval between the diffuser 13 and the light source module 12 such that the diffuser 13 has uneven brightness. The LCD panel display images have light and shade phenomenon. In addition, the supporting rod 14 is placed inside the container 111. As the light source providing light beams impinging onto the surface of the supporting rod 14, the light beams can't effectively reflect or transmissive and, hence, can't project to the surface of the diffuser 13, which easily causes illumination light source loss.

US 2002/0044437 A1 describes a back light assembly for liquid crystal display device. Herein, the back light assembly includes at least one or more diffusion plate supporting members disposed between a reflection sheet and a diffusion plate, and having a complex structure including an elastic material in contact with the diffusion plate. The diffusion plate supporting member has a double-structure including a support portion having sufficient rigidity to prevent the diffusion plate from dropping down, and a contact portion having elasticity for contacting the diffusion plate. The contact portion is preferably made of a soft material, to prevent scratches on a contact area of the diffusion plate due to external impact.

US 2002/0070660 A1 describes a flat type fluorescence lamp. Herein, the flat type fluorescence lamp includes first and second substrates, a light-emitting layer disposed between the first and second substrates, a plurality of supporters selectively arranged on the first substrates and a light-scattering layer placed above the plurality of supporters. The shape of the supporters maybe varied and the supporters could be formed of a transparent material or materials having characteristics of scattering light, so that light generated from the flat luminescent lamp passes through a portion adjoining lower surfaces of the supporters. Furthermore, a cap may be provided to prevent the supporters and the light-scattering means from being damaged from mechanical friction and pressure between the supporters and the light-scattering means above the supporters. The cap may be a soft material. In addition, the cap may cover the plurality of supporters, or be fixed to an upper portion of the supporters.

### SUMMARY OF THE INVENTION

An object of the present invention is to provide a back light apparatus. By means of the elastic device, the diffuser has the supporting buffer to reduce the deformation of the diffuser.

Another object of the present invention is to provide a back light apparatus. By means of the buffer provided by the elastic device, the diffuser can avoid damage to provide high brightness and even lightness light source.

Still another object of the present invention is to provide a back light apparatus. The diffuser is supported by the elastic device to keep the same space for providing high brightness and even lightness.

Further another object of the present invention is to provide a back light apparatus to reduce the illumination loss by means of the reflection layer.

These objects are solved by the back light apparatus according to claim 1. Further advantages, refinements and embodiments of the invention are described in the respective sub-claims.

In particular, the back light apparatus of the present invention comprises a frame having a container, a light source module, a diffuser, and at least one elastic device. The inner surface of the container has a reflection layer, and the light source module has a plurality of cold cathode fluorescent lamps side by side placed inside the container. The diffuser is placed upon the top of the frame. The elastic device has one end fixed on the bottom of the container and has the other end pressed to the diffuser in case of downward deformation of the diffuser. The top of the elastic device has a protrusion which could be transparent materials or high reflection materials to avoid the spots. In addition, the bottom of the container could have a fixing base or a cavity for containing the elastic device. Further, the fixing base could have a reflection layer to raise the reflection area of the light beam.

### BRIEF DESCRIPTION OF THE DRAWINGS

The above and other objects, advantages, and features of the present invention will be understood from the following detailed description of the invention when considered in connection with the accompanying drawings below.
FIG. 1 is an explored view showing a back light apparatus of a direct light mode of the prior art.
FIG. 2 is a sectional view showing a back light apparatus of a direct light mode of the prior art.
FIG. 3 is an explored view showing the first embodiment of a back light apparatus of the present invention.
FIG. 4 is a sectional view showing the first embodiment of a back light apparatus of the present invention.
FIG. 5A, 5B and 5C are active schematic views showing the first embodiment of a back light apparatus of the present invention.
FIG. 6 is a sectional view showing the elastic device for a back light apparatus of a first embodiment of the present invention.
FIG. 7, FIG. 8, FIG. 9, and FIG. 10 are schematic views showing a back light apparatus having a cavity of the second embodiment of the present invention.

### DETAILED DESCRIPTION OF THE INVENTION

### The first embodiment

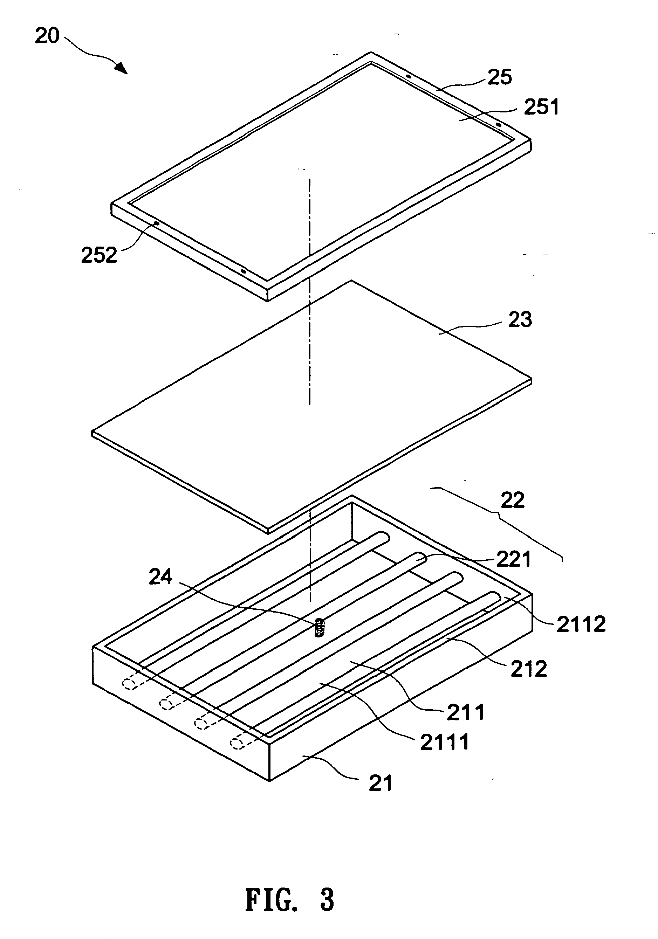

Referring to FIG. 3, a back light apparatus 20 of the present invention comprises a rectangular frame 21, a light source module 22, a diffuser 23, at least one elastic device 24, and a cover 25.

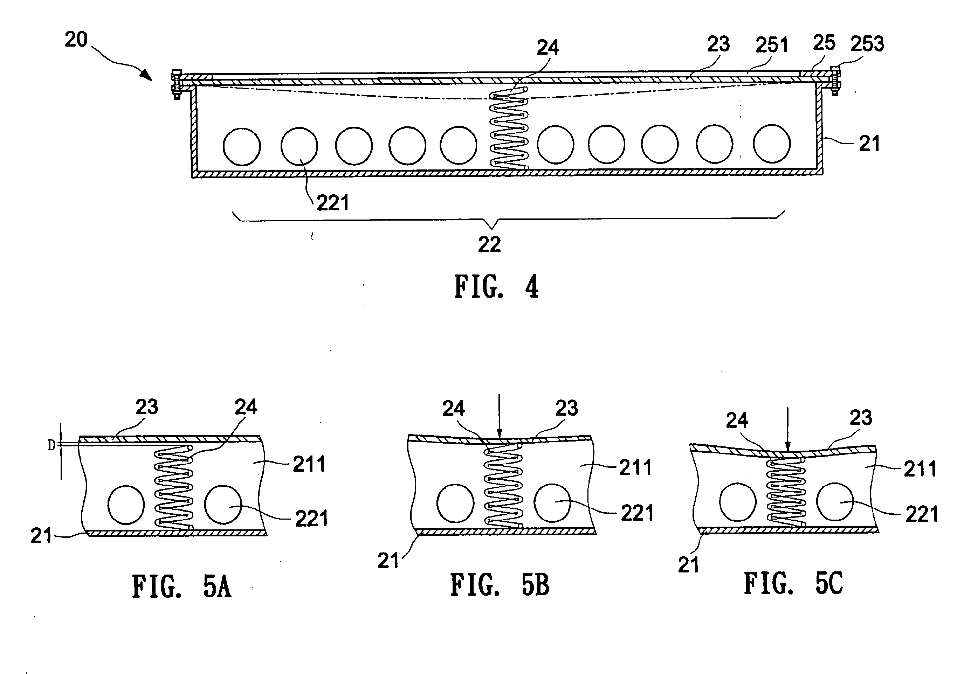

The rectangular frame 21 has a container 211 and a top 212, a bottom surface 2111and an inner surface 2112 of the container 211 have a reflection layer to reflect light beams provided by the light source 22 onto the diffuser 23. The light source module 22 is placed inside the container 211, which comprises a plurality of cold cathode fluorescent lamp 221 (CCFL). The lamps 221 have properly interval and horizontally placed inside the container 211, which has two ends respectively extending to the inner surface 2112 of the frame 21 for fasten. The diffuser 23 is placed upon the top 212 of the rectangular frame 21. The surface of the diffuser 23 facing to the lamps 221 is as a diffuser layer so the light beams through the diffuser layer causes the diffusion that makes the light beams even. The diffuser 23 is made by plastic material. The elastic device 24 is erected and placed inside the container 211, which has one end fixed on the bottom 2111 of the container 211 and the other end forming a space D with the diffuser 23 (as shown in FIG. 5A). The elastic device 24 can be a transparent or high reflection-material spring, elastic piece or plastic element to reduce the effect upon reflection light passing through the diffuser 23. As shown in FIG. 4, the cover 25 is covered on the top 212 of the frame 21, which has a winder 251 smaller than the area of the diffuser 23. Side edges of the cover 25 have a plurality of fixing openings 252 for screwing devices 253 to the top 212 of the frame 21 that clips the two ends of the diffuser 23 for fixing.

The back light apparatus of the present invention is placed behind the LCD panel (not shown in drawing). Part of the light beams provided by the lamps 221 directly project to the diffuser 23, and part of the light beams reflected by the reflection layer of the inner of the container 211 project to the diffuser 23. Then, the light beams pass through the diffuser 23 causes the diffusion to provide high and even brightness for LCD panel to display images.

As shown in FIG. 5A, the diffuser 23 of the back light apparatus 20 of the present invention has a space D with the elastic device 24 that can avoid effecting the light beam passing through the diffuser 23 and forming dark points. As the light source module 22 using for a period, the temperature raises so the plastic diffuser 23 is heated and caused downward deformation. Referring to FIG. 5B, as contacting with the elastic device 24, the diffuser 23 is supported by the elastic device 24 to reduce the deformation of the diffuser 23 and keep the same space for providing high and even brightness. As the deformation of the diffuser 23 increasing to press the elastic device 24, referring to FIG. 5C, the elastic device 24 can compress the elastic device 24 for buffer. Hence, the elastic device 24 doesn't protrude the diffuser 23 to avoid damaging the diffuser 23 to form an uneven surface. Furthermore, the elastic device 24 gradually provides more support to further prevent the diffuser 23 increasing deformation so the diffuser 23 has a better flat providing high and even brightness for LCD panel.

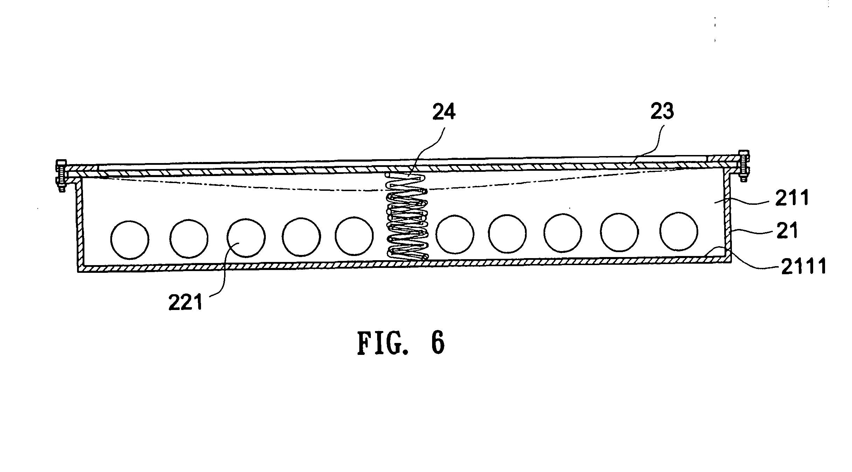

Referring to FIG. 6, for the size of the monitor becomes bigger; the size of the diffuser 23 is bigger. The plastic diffuser 23 only fixes upon around the rectangular frame 21, and the central part of the diffuser 23 is easier to form downward deformation. Hence, one end of the elastic device 24 of the present invention is fixed to the bottom 2111 of the container 211, and the other end directly holds the diffuser 23 to stably support the diffuser 23. Thus, the deformation of the diffuser 23 can be reduced so that the diffuser 23 has a better flat to provide high and even brightness for LCD panel.

### The Second Embodiment

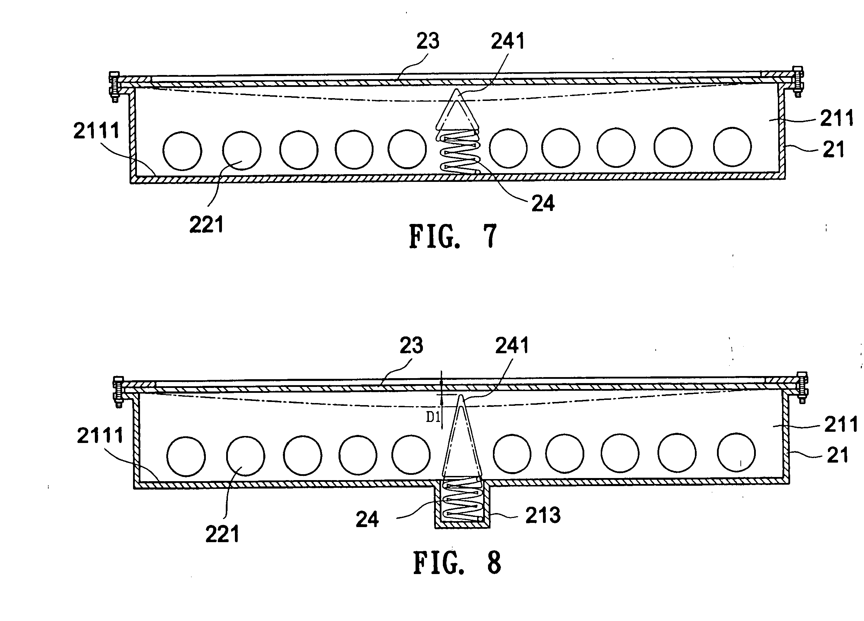

Referring to FIG. 7, the same or similar devices of the present embodiment uses the same marks as the above-mentioned first embodiment. The difference between the present embodiment and the above-mentioned embodiment is that the elastic device 24 could use a spring of metal. The elastic device 24 can collocate a protrusion 241 upon the elastic device 24 to replace the transparent or high reflection optical material spring to lower the cost. The protrusion 241 can be transparent or high reflection material. The present embodiment uses the cone and transparent-material as the protrusion 241, so the contacting area between the protrusion 241 and the diffuser 23 is decreased not to hinder the light beams and to avoid the diffuser 23 forming dark points. In addition, the protrusion 241 could be elastic material to prevent directly protruding the diffuser 23 to damage the diffuser 23 forming an indent. Besides, because the protrusion 241 placed inside the container 211, for avoiding the illumination loss, the protrusion 241 could have reflection layer on the surface.

Referring to FIG. 8, the bottom 2111 of the container 211 has a cavity 213 for placing the elastic device 24. The protrusion 241 fixes upon the elastic device 24, which protrudes out of the top of the cavity 213 and keeps a space D1 with the diffuser 23 or presses to the diffuser 23. The spring 24A having bad reflection is hidden inside the cavity 213 to reduce hindering the light beams. Hence, the light beams provided by the lamps 221 can be reflected by the protrusion 241 and projected onto the diffuser 23 to reduce the illumination loss and shadow.

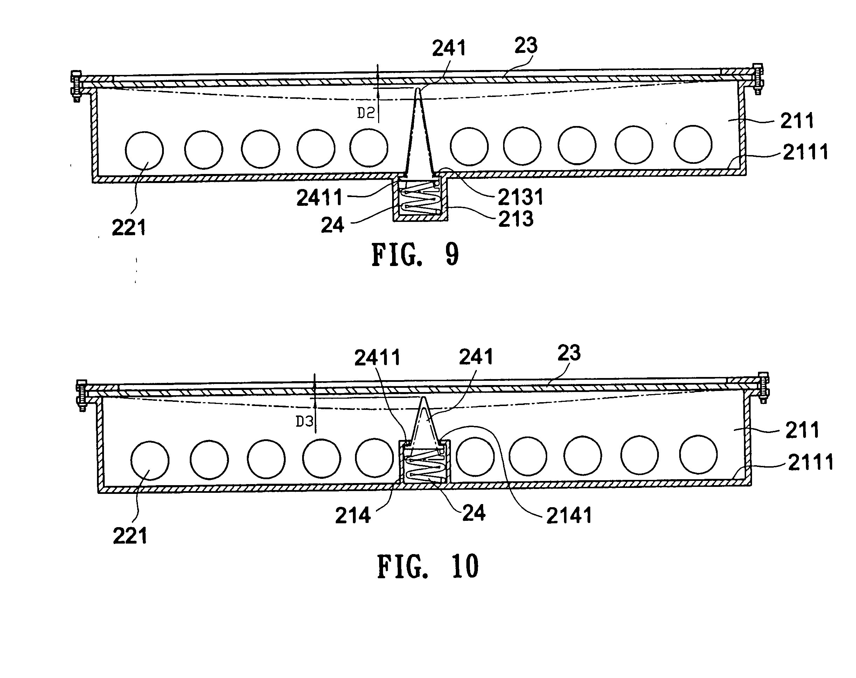

In addition, referring to FIG. 9, the bottom 2111 of the container 211 has the cavity 213 to place the elastic device 24 inside the cavity 213. An opening 2131 of the cavity 213 is smaller than the than the diameter of the elastic device 24. The bottom of the protrusion 241 has a flange 2411. The flange 2411 is mounted in the cavity 213 to limit only the protrusion 241 out of the cavity 213. The protrusion 241 keeps a space D2 with the diffuser 23 or presses to the diffuser 23. The light beams provided by the lamps 221 could be reflected by the protrusion 241 to the diffuser 23 as being used. In addition, according the size of the diffuser 23, properly set original elasticity of the elastic device 24 so that could reduce the illumination loss and shadow caused by the deformation of the diffuser 23.

Referring to FIG. 10, a fixing base 214 is arranged on the bottom 2111 of the container 211. The fixing base 214 could contain the elastic device 24 so the volume of the back light apparatus 20 won't increase to shrink the product volume. The size of an opening 2141 of the fixing base 214 is smaller than the diameter of the elastic device 24 and the surface of the fixing base 214 has a reflection layer. The bottom of the protrusion 241 has a flange 2411. The flange 2411 is mounted in the fixing base 214 to limit only the protrusion 241 out of the fixing base 214. The protrusion 241 keeps a space D3 with the diffuser 23 or presses to the diffuser 23. The light beams provided by the lamps 221 could be reflected by the protrusion 241 and the reflection layer of the fixing base 214 to the diffuser 23 to reduce the illumination loss and shadow caused by the deformation of the elastic device 24.

## Claims

1. A back light apparatus (20), comprising:
- a frame (21), which has a container (211) with a reflection layer in an inner surface (2112);
- a light source module (22), which is placed inside said container (211);
- a diffuser (23), which is placed upon said light source module (22); and
- at least one elastic device (24) placed inside said container (211), which has one end fixed on a bottom (2111) of said container (211) and another end for supporting said diffuser (23), **characterized in that** there is a space (D1,D2,D3) between a top of said elastic device (24) and said diffuser (23) when said diffuser (24) is not deformed and supports said diffuser (23) in case of downward deformation of the diffuser (23), to reduce the deformation of said diffuser (23).

2. The back light apparatus (20) according to claim 1, wherein said elastic device (24) is a transparent material or reflection material.

3. The back light apparatus according to claim 1, wherein said elastic device (24) is a spring, an elastic piece or a plastic device.

4. The back light apparatus (20) according to claim 1, wherein said elastic device (24) has a protrusion (241) on the top.

5. The back light apparatus (20) according to claim 4, wherein said protrusion (241) is a high reflection material or a transparent material.

6. The back light apparatus (20) according to claim 4, wherein said protrusion (241) is an elastic material.

7. The back light apparatus (20) according to claim 4, wherein said protrusion (241) is a cone.

8. The back light apparatus (20) according to claim 1, wherein said container (211) has a fixing base (214) on the bottom (2111), said elastic device (24) placed inside said fixing base (214) whose surface has a reflection layer and wherein said fixing base (214) has an opening (2141) whose size is smaller than the diameter of said elastic device (24), said elastic device having a protrusion (241) on the top.
the bottom of said protrusion having a flange (2411) mounted inside said fixing base (214).

9. The back light apparatus (20) according to claim 1, wherein said container (211) further comprises a cavity (213) on the bottom (2111), said elastic device (24) being placed inside said cavity (213) and wherein said cavity (213) has an opening (2131) whose size is smaller than the diameter of said elastic device (24), said elastic device (24) having a protrusion (241) on the top, the bottom of said protrusion (241) having a flange (2411) mounted inside said cavity (213).

## Patentansprüche

1. Hintergrundbeleuchtungsvorrichtung (20), umfassend:
- einen Rahmen (21), der einen Behälter (211) mit einer Reflexionsschicht an einer inneren Oberfläche (2112) aufweist;
- ein Lichtquellenmodul (22), das im Behälter (211) angeordnet ist;
- einen Diffusor (23), der auf dem Lichtquellenmodul (22) angeordnet ist; und
- wenigstens eine elastische Vorrichtung (24), die im Behälter (211) angeordnet ist, wobei deren eines Ende an einem Boden (2111) des Behälters (211) befestigt ist, und wobei deren anderes Ende zum Stützen des Diffusors vorgesehen ist, **dadurch gekennzeichnet, dass** ein Abstand (D1, D2, D3) zwischen einer Oberseite der elastischen Vorrichtung (24) und dem Diffusor (23) vorhanden ist, wenn der Diffusor (23) nicht deformiert ist, und den Diffusor (23) stützt, wenn dieser nach unten gerichtet deformiert ist, um die Deformation des Diffusors (23) zu reduzieren.

2. Hintergrundbeleuchtungsvorrichtung (20) nach Anspruch 1, wobei die elastische Vorrichtung (24) ein transparentes Material oder ein Reflexionsmaterial ist.

3. Hintergrundbeleuchtungsvorrichtung (20) nach Anspruch 1, wobei die elastische Vorrichtung (24) eine Feder, ein elastisches Element oder eine Plastikvorrichtung ist.

4. Hintergrundbeleuchtungsvorrichtung (20) nach Anspruch 1, wobei die elastische Vorrichtung (24) einen Vorsprung (241) auf der Oberseite aufweist.

5. Hintergrundbeleuchtungsvorrichtung (20) nach Anspruch 4, wobei der Vorsprung (241) ein hochreflektierendes Material oder ein transparentes Material ist.

6. Hintergrundbeleuchtungsvorrichtung (20) nach Anspruch 4, wobei der Vorsprung (241) ein elastisches Material ist.

7. Hintergrundbeleuchtungsvorrichtung (20) nach Anspruch 4, wobei der Vorsprung (241) ein Kegel ist.

8. Hintergrundbeleuchtungsvorrichtung (20) nach Anspruch 1, wobei der Behälter (211) eine Befestigungsbasis (214) auf dem Boden (2111) aufweist, wobei die elastische Vorrichtung (24) in der Befestigungsbasis (214) angeordnet ist, deren Oberfläche eine Reflexionsschicht aufweist, wobei die Befestigungsbasis (214) eine Öffnung (2141) aufweist, deren Größe kleiner als der Durchmesser der elastischen Vorrichtung (24) ist, wobei die elastische Vorrichtung (24) einen Vorsprung (241) auf der Oberseite aufweist, und wobei eine Unterseite des Vorsprungs einen Flansch (2411) aufweist, der in der Befestigungsbasis (214) befestigt ist.

9. Hintergrundbeleuchtungsvorrichtung (20) nach Anspruch 1, wobei der Behälter (211) weiter eine Ausnehmung (213) am Boden (2111) aufweist, wobei die elastische Vorrichtung (24) in der Ausnehmung (213) angeordnet ist, wobei die Ausnehmung (213) eine Öffnung (2131) aufweist, deren Größe kleiner als der Durchmesser der elastischen Vorrichtung (24) ist, wobei die elastische Vorrichtung (24) einen Vorsprung (241) auf der Oberseite aufweist, und wobei eine Unterseite des Vorsprungs (241) einen Flansch (2411) aufweist, der in der Ausnehmung (213) befestigt ist.

## Revendications

1. Appareil de rétroéclairage (20), comprenant :
- un cadre (21) qui possède un boîtier (211) avec une couche de réflexion dans une surface intérieure (2112) ;
- un module formant source de lumière (22), qui est placé à l'intérieur dudit boîtier (211) ;
- un diffuseur (23), qui est placé sur ledit module formant source de lumière (22) ; et
- au moins un dispositif élastique (24) placé à l'intérieur dudit boîtier (211), qui possède une extrémité fixée sur un fond (2111) dudit boîtier (211) et une autre extrémité pour supporter ledit diffuseur (23), **caractérisé en ce qu'**il existe un espace (D1, D2, D3) entre un sommet dudit dispositif élastique (24) et ledit diffuseur (23) quand ledit diffuseur (24) n'est pas déformé, et supporte ledit diffuseur (23) dans le cas d'une déformation du diffuseur (23) vers le bas, pour réduire la déformation dudit diffuseur (23).

2. Appareil de rétroéclairage (20) selon la revendication 1, dans lequel ledit dispositif élastique (24) est un matériau transparent ou un matériau réfléchissant.

3. Appareil de rétroéclairage selon la revendication 1, dans lequel ledit dispositif élastique (24) est un ressort, une pièce élastique ou un dispositif plastique.

4. Appareil de rétroéclairage (20) selon la revendication 1, dans lequel ledit dispositif élastique (24) comporte une projection (241) sur le sommet.

5. Appareil de rétroéclairage (20) selon la revendication 4, dans lequel ladite projection (241) est un matériau hautement réfléchissant ou un matériau transparent.

6. Appareil de rétroéclairage (20) selon la revendication 4, dans lequel ladite projection (241) est un matériau élastique.

7. Appareil de rétroéclairage (20) selon la revendication 4, dans lequel ladite projection (241) est un cône.

8. Appareil de rétroéclairage (20) selon la revendication 1, dans lequel ledit boîtier (211) possède une base de fixation (214) sur le fond (2111), ledit dispositif élastique (24) étant placé à l'intérieur de ladite base de fixation (214) dont la surface possède une couche de réflexion, et dans lequel ladite base de fixation (214) comporte une ouverture (2141) dont la taille est plus petite que le diamètre dudit dispositif élastique (24), ledit dispositif élastique ayant une projection (241) sur le sommet,
le fond de ladite projection ayant une bride (2411) montée à l'intérieur de ladite base de fixation (214).

9. Appareil de rétroéclairage (20) selon la revendication 1, dans lequel ledit boîtier (211) comprend en outre une cavité (213) sur le fond (2111), ledit dispositif élastique (24) étant placé à l'intérieur de ladite cavité (213), et dans lequel ladite cavité (213) comporte une ouverture (2131) dont la taille est plus petite que le diamètre dudit dispositif élastique (24), ledit dispositif élastique (24) ayant une projection (241) sur le sommet, le fond de ladite projection (241) ayant une bride (2411) montée à l'intérieur de ladite cavité (213).
